# NEUE EUROPÄISCHE PATENTSCHRIFT

(11) **EP 3 647 135 B2**
(45) Veröffentlichungstag und Bekanntmachung des Hinweises auf die Entscheidung über den Einspruch: **07.10.2026**
(45) Hinweis auf die Patenterteilung: 29.06.2022
(21) Anmeldenummer: 19203759.6
(22) Anmeldetag: 17.10.2019
(51) Int. Cl.: B60T 7/22, B60K 31/00, B60W 30/08, B60W 30/18, G08G 1/16

(54) **ELEKTRONISCHES BREMSSYSTEM**
ELECTRONIC BRAKING SYSTEM
SYSTÈME DE FREINAGE ÉLECTRONIQUE

(30) Priorität: 01.11.2018 DE 102018127313
(43) Veröffentlichungstag der Anmeldung: 06.05.2020
(73) Patentinhaber: ZF CV Systems Europe BV, 1170 Brussels (BE)
(72) Erfinder: STENDER, Axel, 31787 Hameln (DE); VON DER BEEKE, Jan-Christoph, 38114 Braunschweig (DE)
(74) Vertreter: Putzke, Sascha

(56) Entgegenhaltungen:
- EP-A1- 2 799 296
- WO-A1-2004/055611
- DE-A1- 10 357 372
- DE-A1- 102005 036 794
- DE-A1- 102006 044 803
- DE-A1- 102008 018 783
- DE-A1- 19 831 262
- US-A1- 2002 017 412

## Beschreibung

Die Erfindung betrifft ein elektronisches Bremssystem für ein Fahrzeug, mit einem Rückraumüberwachungssystem und der Möglichkeit automatische Bremseingriffe auszuführen. Daneben betrifft die Erfindung ein Verfahren zum Steuern eines elektronischen Bremssystems.

Moderne Nutzfahrzeuge, insbesondere Motorwagen oder Lastzüge bestehend aus Zugmaschine und Anhänger, weisen ein Rückraumüberwachungssystem auf, welches bei Rückwärtsfahrt und Annäherung an ein Hindernis das Fahrzeug automatisch bremst. Ein solches Rückraumüberwachungssystem ist beispielsweise in der DE 198 31 262 A1 offenbart. Das Rückraumüberwachungssystem ist relativ komplex. Sensoren tasten die rückwärtige Umgebung des Fahrzeugs ab, übersenden Daten an ein Steuergerät und dieses wirkt auf die Bremsen oder sogar das Motormanagement ein. Typischerweise wird das Rückraumüberwachungssystem aktiviert durch Einlegen eines Rückwärtsgangs. Anschließend überprüft das elektronische Bremssystem das Rückraumüberwachungssystem durch geeignete Prüfroutinen. Alternativ oder zusätzlich überprüft sich das Rückraumüberwachungssystem selbst durch entsprechende Prüfroutinen. Im Fehlerfall ist das Rückraumüberwachungssystem als Subsystem des elektronischen Bremssystems nicht nutzbar und der Fahrer muss Gelegenheit haben davon Kenntnis zu bekommen.

Aus der DE 103 57 372 B4 ist eine Vorrichtung zur Unterstützung des Fahrers eines Fahrzeugs bei Rückwärtsfahrt bekannt. Bevor das Fahrzeug vor einem Hindernis automatisch abgebremst wird, erhält der Fahrer ein optisches Signal mittels einer Warnlampe einer Antiblockierregelung. Der Fahrer muss das Signal bestätigen, etwa durch Betätigen eines Fußbremspedals. Erst dann wird die automatische Bremsung eingeleitet. Die Warnlampe der Antiblockierregelung gibt demnach dem Fahrer Auskunft über einen speziellen Zustand, während das Rückraumüberwachungssystem aktiv ist.

Die Nutzung der für die Antiblockierregelung vorgesehenen Warnlampe hat den Nachteil, dass der Fahrer sie beim Blick in die Rückspiegel beim Rückwärtsfahren nicht sieht. Außerdem ist die Verwendung der Warnlampe zur Anzeige von Fehlern außerhalb der Antiblockierregelung in einigen Ländern nicht erlaubt. Die Ansteuerung anderer Lampen im Fahrzeug verursacht zusätzlichen Verkabelungsaufwand und ist ebenfalls nicht in jedem Land erlaubt.

Die DE 10 2006 044 803 A1 offenbart ein Kraftfahrzeug mit einer Einrichtung zur Unterstützung des Fahrers beim Einparken. Der Fahrer erhält ein Informationssignal, wenn über einen Abstandssensor und eine Steuerungseinrichtung in einem Erfassungsbereich ein Hindernis erfasst wurde, auf das gegebenenfalls aufgefahren werden kann. Das Informationssignal ist ein optisches Signal, insbesondere in Form einer Anzeige an einem Display, ein akustisches Signal oder ein haptisches Signal über ein Lenkrad oder einen Sitz.

Aufgabe der vorliegenden Erfindung ist die Schaffung eines elektronischen Bremssystems, mit dem dem Fahrer Informationen über das Rückraumüberwachungssystem auch ohne zwingende Nutzung einer Lampe im Fahrzeug mitteilbar sind.

Zur Lösung der Aufgabe weist das elektronische Bremssystem die Merkmale des Anspruchs 1 auf. Insbesondere ist vorgesehen, dass ein Betriebszustand des Rückraumüberwachungssystems durch einen automatischen Bremseingriff signalisierbar ist. Der Bremseingriff dient als haptisches Feedback für den Fahrer und kann definierte Zustände des Rückraumüberwachungssystems anzeigen. Zusätzliche Hardware ist nicht erforderlich. Ein Bremseingriff kann mehrere Bremsungen beinhalten.

Nach einem weiteren Gedanken der Erfindung kann das Bremssystem derart eingerichtet sein, dass bei beginnender Rückwärtsfahrt des Fahrzeugs und aktiviertem Rückraumüberwachungssystem ein Bremseingriff automatisch ausführbar ist, auch wenn das Rückraumüberwachungssystem kein Hindernis als einer Weiterfahrt entgegenstehend erkennt. Auch in diesem Fall soll mit dem Bremseingriff ein bestimmter Zustand des Rückraumüberwachungssystems dem Fahrer anzeigbar sein.

Vorzugsweise findet ein automatischer Bremseingriff nach beginnender Rückwärtsfahrt und aktiviertem Rückraumüberwachungssystem statt, wenn das Rückraumüberwachungssystem fehlerfrei arbeitet und/oder wenn nach automatischer interner Überprüfung keine Fehler festgestellt wurden.

Der Bremseingriff ist für den Fall vorgesehen, wenn das Rückraumüberwachungssystem betriebsbereit und fehlerfrei ist. Nach der Aktivierung durchläuft das Rückraumüberwachungssystem automatisch interne Prüfroutinen. Im Zuge der internen automatischen Überprüfung wird auch festgestellt, ob und inwieweit das Rückraumüberwachungssystem überhaupt betriebsbereit ist. Wenn dies der Fall ist und kein Fehler festgestellt wird, erfolgt der Bremseingriff. Der Fahrer hat durch den Bremseingriff eine aktive Anzeige als Signal für ein betriebsbereites und fehlerfrei arbeitendes Rückraumüberwachungssystem.

Der Bremseingriff ist zeitlich begrenzt. Vorzugsweise handelt es sich nur um eine sehr kurze Bremsung, einen sogenannten Bremspuls, sodass der Fahrer einen kurzen aber nicht unangenehmen Ruck verspürt.

Nach einem weiteren Gedanken der Erfindung soll die Zeitdauer für den vorgesehenen Bremseingriff weniger als 1 sek betragen. Insbesondere soll die Zeitdauer für den Bremseingriff nur bis zu 0,5 sek oder sogar nur bis zu 0,1 sek betragen. Wichtig ist, dass der Fahrer den Bremseingriff bemerkt. Zugleich soll die Rückwärtsfahrt so wenig wie möglich beeinträchtigt werden.

Nach einem weiteren Gedanken der Erfindung soll der Bremseingriff nach weniger als 1 m Rückwärtsfahrt vorgesehen sein. Insbesondere soll sich das Fahrzeug weniger als 50 cm oder sogar weniger als 10 cm rückwärts bewegt haben, bis der Bremseingriff erfolgen kann.

Beim Auftreten eines Fehlers im zuvor aktivierten Rückraumüberwachungssystem ist eine dauerhafte Bremsung vorgesehen. Dadurch wird die Sicherheit des Systems erhöht.

Nach einem weiteren Gedanken der Erfindung kann eine dauerhafte Bremsung bis zum Stillstand vorgesehen sein. Vorzugsweise wird der Stillstand automatisch für eine bestimmte Zeitdauer beibehalten, vorzugsweise für 1 bis 10 sek. Für den Fahrer ist dies ein unübersehbares Signal für das Auftreten eines Fehlers.

Nach einem weiteren Gedanken der Erfindung kann das Rückraumüberwachungssystem durch Betätigung einer Betriebsbremse bedienbar sein. Der Fahrer kann so Funktionen des Rückraumüberwachungssystems auf einfache Weise beeinflussen. Bei aktivem Rückraumüberwachungssystem wird die Betätigung der Betriebsbremse durch den Fahrer vom elektronischen Bremssystem in zuvor festgelegter Weise interpretiert. Die Betätigung der Betriebsbremse wird vom elektronischen Bremssystem durch geeignete Sensoren erfasst. Die folgende Beeinflussung des Rückraumüberwachungssystems kann dabei von weiteren Nebenbedingungen oder Sensorsignalen abhängen.

Nach einem weiteren Gedanken der Erfindung kann der Bremseingriff, insbesondere eine dauerhafte Bremsung, durch Betätigung einer Betriebsbremse aufhebbar sein. Während des Bremseingriffs betätigt der Fahrer die Betriebsbremse. Dadurch wird die dauerhafte Bremsung aufgehoben und der Fahrer hat die volle Verantwortung für den weiteren Verlauf. Vorzugsweise muss der Fahrer die Betriebsbremse mit einem definierten Mindestdruck betätigen und/oder so, dass ein Mindestbremsdruck erreicht wird.

Nach einem weiteren Gedanken der Erfindung kann zur Anzeige unterschiedlicher Zustände des Rückraumüberwachungssystems oder des Fahrzeugs wenigstens einer der nachfolgenden automatischen Bremseingriffe vorgesehen sein:
a) gepulste Bremsung, einmalig oder mehrfach;
b) kurzzeitig oder dauerhaft;
c) mit definiertem Gradienten beim Druckaufbau oder Druckabbau des Bremsdrucks;
d) Bremseingriff auf einer Seite des Fahrzeugs unterscheidet sich vom Bremseingriff auf der anderen Seite des Fahrzeugs;
e) Bremseingriff mit Bremsdruck definierter Höhe;
f) Feststellen einer Federspeicherbremse.

Nach einem weiteren Gedanken der Erfindung kann vorgesehen sein, dass auf einen automatischen Bremseingriff hin eine Reaktion einer Bedienungsperson erfolgen muss, damit der Bremseingriff nicht fortgesetzt oder verstärkt wird. So kann vorgesehen sein, dass die Bedienungsperson, insbesondere der Fahrer, irgendein zuvor definiertes Betätigungsorgan im Fahrzeug betätigen muss, damit der Bremseingriff nicht fortgesetzt oder verstärkt wird.

Nach einem weiteren Gedanken der Erfindung kann vorgesehen sein, dass die Reaktion der Bedienungsperson eine Interaktion mit dem Bremssystem sein muss. Vorzugsweise ist eine Bremsung mit einem definierten Mindestdruck erforderlich, einmal oder mehrfach. Möglich ist auch das Feststellen und Lösen einer Feststellbremse als Interaktion.

Nach einem weiteren Gedanken der Erfindung kann vorgesehen sein, dass zusätzlich eine Warnlampe einer Antiblockierregelung aktivierbar ist. Die Warnlampe kann als zusätzlicher Hinweis für die Bedienungsperson nützlich sein, insbesondere bei unebener und Erschütterungen auslösender Fahrbahnoberfläche, wenn die Wahrnehmung des Bremseingriffs beeinträchtigt ist.

Gegenstand der Erfindung ist auch ein Verfahren zum Steuern eines elektronischen Bremssystems in einem Fahrzeug mit Rückraumüberwachungssystem und der Möglichkeit eines automatischen Bremseingriffs. Erfindungsgemäß ist vorgesehen, dass ein Betriebszustand des Rückraumüberwachungssystems durch einen automatischen Bremseingriff signalisiert wird. Der Bremseingriff dient als haptisches Feedback für den Fahrer.

Es ist vorgesehen, dass bei beginnender Rückwärtsfahrt und aktiviertem, fehlerfreiem oder betriebsbereitem Rückraumüberwachungssystem ein zeitlich begrenzter Bremseingriff automatisch ausgeführt wird. Der Bremseingriff dient als haptisches Feedback für den Fahrer und zur Anzeige, dass das Rückraumüberwachungssystem aktiv ist.

Es findet beim anschließenden Auftreten eines Fehlers im Rückraumüberwachungssystem automatisch eine dauerhafte Bremsung statt. Insbesondere wird die automatische Bremsung bis zum Stillstand des Fahrzeugs durchgeführt und ist durch eine Aktion des Fahrers oder einer Bedienungsperson aufhebbar.

Nach einem weiteren Gedanken der Erfindung können unterschiedliche Zustände des Rückraumüberwachungssystems oder des Fahrzeugs durch wenigstens einen der nachfolgenden automatischen Bremseingriffe angezeigt werden:
a) gepulste Bremsung, einmalig oder mehrfach;
b) kurzzeitig oder dauerhaft;
c) mit definiertem Gradienten beim Druckaufbau oder Druckabbau des Bremsdrucks;
d) Bremseingriff auf einer Seite des Fahrzeugs unterscheidet sich vom Bremseingriff auf der anderen Seite des Fahrzeugs;
e) Bremseingriff mit Bremsdruck definierter Höhe;
f) Feststellen einer Federspeicherbremse.

Nach einem weiteren Gedanken der Erfindung kann vorgesehen sein, dass auf einen automatischen Bremseingriff hin eine Reaktion einer Bedienungsperson oder des Fahrers erfolgen muss, damit der Bremseingriff nicht fortgesetzt oder verstärkt wird. Vorzugsweise muss die Reaktion der Bedienungsperson oder des Fahrers eine Interaktion mit dem Bremssystem sein.

Nach einem weiteren Gedanken der Erfindung kann vorgesehen sein, dass das Rückraumüberwachungssystem durch Betätigung einer Betriebsbremse bedient wird. Die Funktion des Rückraumüberwachungssystems wird durch die Betätigung der Betriebsbremse beeinflusst.

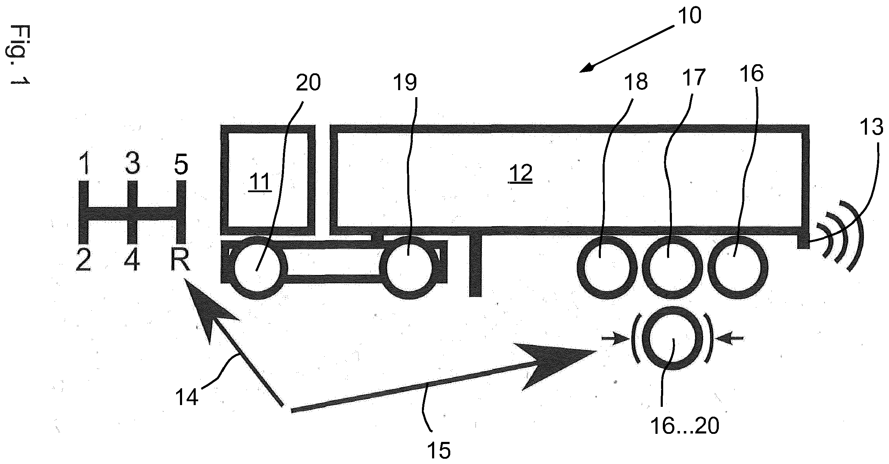

Weitere Merkmale der Erfindung ergeben sich aus der Beschreibung im Übrigen und aus den Ansprüchen. Vorteilhafte Ausführungsbeispiele der Erfindung werden nachfolgend anhand der einzigen Figur erläutert: Ein Fahrzeug 10 besteht hier aus einer Zugmaschine 11 und einem Auflieger als Anhänger 12. Das Fahrzeug weist ein Rückraumüberwachungssystem als Bestandteil eines elektronischen Bremssystems auf. Mit dem Bremssystem sind automatische Bremseingriffe aufgrund vordefinierter Bedingungen möglich. Bestandteil des Rückraumüberwachungssystems ist mindestens ein rückwärtsgerichteter Sensor 13.

Beim Einlegen eines Rückwärtsgangs R, siehe Pfeil 14, wird dies vom elektronischen Bremssystem durch geeignete Sensoren, etwa im Getriebe oder an einer Leitung zu einem Rückfahrscheinwerfer, detektiert und das Rückraumüberwachungssystem wird automatisch aktiviert. Anschließend ist auch der Sensor 13 betriebsbereit und detektiert den Raum hinter dem Fahrzeug.

Das Rückraumüberwachungssystem weist interne Prüfroutinen auf, mit denen festgestellt wird, ob und inwieweit das Rückraumüberwachungssystem aktiv, betriebsbereit ist und/oder fehlerfrei arbeitet. Das Fahrzeug beginnt mit der Rückwärtsfahrt. Nach einem definierten Zeitraum, nach Beginn der Rückwärtsfahrt, findet unter bestimmten Betriebsbedingungen automatisch ein Bremseingriff durch das elektronische Bremssystem statt, siehe Pfeil 15. Von vorhandenen Rädern 16, 17, 18, 19, 20 wird wenigstens ein Rad 16 bis 20 oder werden wenigstens die Räder einer Achse dadurch gebremst. Vorzugsweise werden alle Räder 16, 17, 18 des Anhängers 12 gebremst.

Der Bremseingriff ist in diesem Ausführungsbeispiel ein nur kurzer Bremspuls des elektronischen Bremssystems, sodass der Fahrer einen kurzen Ruck bemerkt. Dieser Ruck ist als Aktivierungsbestätigung des Systems an den Fahrer zu verstehen. Bei fehlerhaftem Rückraumüberwachungssystem entfällt dieser Ruck, sodass der Fahrer weiß, dass das Rückraumüberwachungssystem bei der aktuellen Rückwärtsfahrt nicht zur Verfügung steht.

Tritt ein Fehler bei zuvor aktiviertem Rückraumüberwachungssystem während der Rückwärtsfahrt auf, so wird das Fahrzeug vorzugsweise automatisch bis zum Stillstand eingebremst und dabei die Bremse länger gehalten. Dadurch wird eine Kollision aufgrund des nicht mehr betriebsfähigen Rückraumüberwachungssystems vermieden. Der Fehlerzustand kann gegenüber einer gewollten Bremsung vor einem Hindernis durch die verlängerte Bremszeit nach dem Fahrzeugstillstand erkannt werden. Auch kann ein zusätzliches Signal angezeigt werden, etwa ein dauerhaftes oder mehrfaches Aufleuchten einer Warnlampe einer Antiblockierregelung.

Zusätzlich oder alternativ ist eine Abstandsanzeige etwa durch zwei kurze oder mehrere Bremspulse bei einem bestimmten Abstand vorgesehen. Grundsätzlich können verschiedene Arten von Bremseingriffen als haptisches Feedback für den Fahrer vorgesehen sein:
a) kurzer, einmaliger Bremspuls, typischerweise als Bestätigung der Aktivierung;
b) Einbremsen bis zum Stillstand und langes Aufrechterhalten der Bremsung, typischerweise als Fehleranzeige während der Rückwärtsfahrt bei zuvor aktivem Rückraumüberwachungssystem;
c) doppelter/mehrfacher Bremspuls, gegebenenfalls auch phasenverschobene Bremspulse der rechten und linken Fahrzeugräder; insbesondere nutzbar, um ein bestimmtes Ereignis, etwa das Unterschreiten eines definierten Mindestabstands zu einem Hindernis, anzuzeigen;
d) durch Art (Bremspuls/konstante Bremsung), Dauer, Gradient (langsamer/schneller Druckaufbau/Druckabbau in den Bremszylindern), Seite (rechte/linke Räder) und Bremsdruck und erforderliche Fahrerreaktion (etwa Treten der Bremse als Bestätigung) sind eine Vielzahl an verschiedenen Arten eines haptischen Feedbacks erzeugbar, die zur Anzeige verschiedener Systemzustände genutzt werden können.

Darüber hinaus ist auch eine Interaktion des Fahrers mit dem Rückraumüberwachungssystem möglich. Zum Beispiel kann im Fehlerfall bis zum Stillstand abgebremst werden und die Bremsung solange aufrechterhalten werden, bis der Fahrer durch Betätigen des Bremspedals, idealerweise mit einem Mindestdruck, die Kenntnisnahme des Fehlers bestätigt.

Bestandteil des elektronischen Bremssystems ist ein nicht gezeigtes elektronisches Steuergerät, in dem vorzugsweise auch die Funktionen des Rückraumüberwachungssystems implementiert sind.

### Bezugszeichenliste

- 10: Fahrzeug
- 11: Zugmaschine
- 12: Anhänger
- 13: Sensor
- 14: Pfeil
- 15: Pfeil
- 16: Rad
- 17: Rad
- 18: Rad
- 19: Rad
- 20: Rad

- R: Rückwärtsgang

## Patentansprüche

1. Elektronisches Bremssystem für ein Fahrzeug (10, 11, 12), mit einem Rückraumüberwachungssystem und der Möglichkeit automatische Bremseingriffe auszuführen, wobei ein Betriebszustand des Rückraumüberwachungssystems durch einen automatischen Bremseingriff für den Fahrer signalisierbar ist und wobei der Bremseingriff zeitlich begrenzt und für den Fall vorgesehen ist, dass das Rückraumüberwachungssystem betriebsbereit und fehlerfrei ist, **dadurch gekennzeichnet, dass** beim Auftreten eines Fehlers im zuvor aktivierten Rückraumüberwachungssystem eine dauerhafte Bremsung vorgesehen ist.

2. Bremssystem nach Anspruch 1, **dadurch gekennzeichnet, dass** das Bremssystem derart eingerichtet ist, dass bei beginnender Rückwärtsfahrt des Fahrzeugs (10, 11, 12) und aktiviertem Rückraumüberwachungssystem ein Bremseingriff automatisch ausführbar ist, auch wenn das Rückraumüberwachungssystem kein Hindernis als einer Weiterfahrt entgegenstehend erkennt.

3. Bremssystem nach einem der Ansprüche 1 und 2, **dadurch gekennzeichnet, dass** als Zeitdauer für den Bremseingriff weniger als 1 sek vorgesehen ist.

4. Bremssystem nach einem der Ansprüche 1 bis 3, **dadurch gekennzeichnet, dass** der Bremseingriff nach weniger als 1 m Rückwärtsfahrt vorgesehen ist.

5. Bremssystem nach einem der vorhergehenden Ansprüche, **dadurch gekennzeichnet, dass** eine dauerhafte Bremsung bis zum Stillstand vorgesehen ist.

6. Bremssystem nach einem der Ansprüche 1 bis 5, **dadurch gekennzeichnet, dass** das Rückraumüberwachungssystem durch Betätigung einer Betriebsbremse bedienbar ist.

7. Bremssystem nach einem der Ansprüche 1 bis 6, **dadurch gekennzeichnet, dass** der Bremseingriff durch Betätigung einer Betriebsbremse aufhebbar ist.

8. Bremssystem nach einem der Ansprüche 1 bis 7, **dadurch gekennzeichnet, dass** zur Anzeige unterschiedlicher Zustände des Rückraumüberwachungssystems oder des Fahrzeugs (10, 11, 12) wenigstens einer der nachfolgenden automatischen Bremseingriffe vorgesehen ist:
a) gepulste Bremsung, einmalig oder mehrfach;
b) kurzzeitig oder dauerhaft;
c) mit definiertem Gradienten beim Druckaufbau oder Druckabbau des Bremsdrucks;
d) Bremseingriff auf einer Seite des Fahrzeugs unterscheidet sich vom Bremseingriff auf der anderen Seite des Fahrzeugs;
e) Bremseingriff mit Bremsdruck definierter Höhe;
f) Feststellen einer Federspeicherbremse.

9. Bremssystem nach einem der Ansprüche 1 bis 8, **dadurch gekennzeichnet, dass** auf einen automatischen Bremseingriff hin eine Reaktion einer Bedienungsperson oder des Fahrers erfolgen muss, damit der Bremseingriff nicht fortgesetzt oder verstärkt wird.

10. Bremssystem nach Anspruch 9, **dadurch gekennzeichnet, dass** die Reaktion der Bedienungsperson oder des Fahrers eine Interaktion mit dem Bremssystem sein muss.

11. Bremssystem nach einem der Ansprüche 1 bis 10, **dadurch gekennzeichnet, dass** zusätzlich eine Warnlampe einer Antiblockierregelung aktivierbar ist.

12. Verfahren zum Steuern eines elektronischen Bremssystems in einem Fahrzeug (10, 11, 12) mit Rückraumüberwachungssystem und der Möglichkeit eines automatischen Bremseingriffs, wobei ein Betriebszustand des Rückraumüberwachungssystems durch einen automatischen Bremseingriff für den Fahrer signalisiert wird, wobei bei beginnender Rückwärtsfahrt und aktiviertem, fehlerfreiem oder betriebsbereitem Rückraumüberwachungssystem ein zeitlich begrenzter Bremseingriff automatisch ausgeführt wird, **dadurch gekennzeichnet, dass** beim anschließenden Auftreten eines Fehlers im Rückraumüberwachungssystem automatisch eine dauerhafte Bremsung stattfindet.

13. Verfahren nach Anspruch 12, **dadurch gekennzeichnet, dass** unterschiedliche Zustände des Rückraumüberwachungssystems oder des Fahrzeugs (10, 11, 12) durch wenigstens einen der nachfolgenden automatischen Bremseingriffe angezeigt werden:
a) gepulste Bremsung, einmalig oder mehrfach;
b) kurzzeitig oder dauerhaft;
c) mit definiertem Gradienten beim Druckaufbau oder Druckabbau des Bremsdrucks;
d) Bremseingriff auf einer Seite des Fahrzeugs unterscheidet sich vom Bremseingriff auf der anderen Seite des Fahrzeugs;
e) Bremseingriff mit Bremsdruck definierter Höhe;
f) Feststellen einer Federspeicherbremse.

14. Verfahren nach einem der Ansprüche 12 und 13, **dadurch gekennzeichnet, dass** ein automatischer Bremseingriff nur dann nicht fortgesetzt oder verstärkt wird, wenn eine Reaktion einer Bedienungsperson oder des Fahrers erfolgt.

15. Verfahren nach einem der Ansprüche 12 bis 14, **dadurch gekennzeichnet, dass** das Rückraumüberwachungssystem durch Betätigung einer Betriebsbremse bedient wird.

## Claims

1. Electronic brake system for a vehicle (10, 11, 12), comprising a rear-area monitoring system and the possibility of performing automatic braking interventions, it being possible for an operating state of the rear-area monitoring system to be signaled to the driver by an automatic braking intervention and the braking intervention being time-limited and being provided for the event that the rear-area monitoring system is operational and fault-free, **characterized in that** long-lasting braking is provided when a fault occurs in the previously activated rear-area monitoring system.

2. Brake system according to claim 1, **characterized in that** the brake system is configured such that, when the vehicle (10, 11, 12) begins to reverse and the rear-area monitoring system is activated, a braking intervention can be carried out automatically, even if the rear-area monitoring system does not detect any obstacle preventing further travel.

3. Brake system according to any of claims 1 and 2, **characterized in that** less than 1 second is provided as the duration for the braking intervention.

4. Brake system according to any of claims 1 to 3, **characterized in that** the braking intervention is provided after less than 1 m of reversing.

5. Brake system according to any of the preceding claims,
**characterized in that** long-lasting braking is provided until standstill.

6. Brake system according to any of claims 1 to 5, **characterized in that** the rear-area monitoring system can be operated by actuating a service brake.

7. Brake system according to any of claims 1 to 6, **characterized in that** the braking intervention can be released by actuating a service brake.

8. Brake system according to any of claims 1 to 7, **characterized in that** at least one of the following automatic braking interventions is provided to indicate different states of the rear-area monitoring system or the vehicle (10, 11, 12):
a) pulsed braking, once or multiple times;
b) short-term or long-lasting;
c) with a defined gradient during pressure build-up or pressure reduction of the brake pressure;
d) braking intervention on one side of the vehicle differs from braking intervention on the other side of the vehicle;
e) braking intervention with brake pressure at a defined level;
f) locking a spring-loaded brake.

9. Brake system according to any of claims 1 to 8, **characterized in that** an operator or the driver must react to an automatic braking intervention in order for the braking intervention to not be continued or intensified.

10. Brake system according to claim 9, **characterized in that** the reaction of the operator or driver must be an interaction with the brake system.

11. Brake system according to any of claims 1 to 10, **characterized in that** a warning light of an anti-lock brake control system can additionally be activated.

12. Method for controlling an electronic brake system in a vehicle (10, 11, 12), comprising a rear-area monitoring system and the possibility of automatic braking intervention, an operating state of the rear-area monitoring system being signaled to the driver by an automatic braking intervention, a time-limited braking intervention being automatically performed when reversing begins and the rear-area monitoring system is activated, fault-free, or operational,
**characterized in that** if a fault subsequently occurs in the rear-area monitoring system, a long-lasting braking action automatically takes place.

13. Method according to claim 12, **characterized in that** different states of the rear-area monitoring system or of the vehicle (10, 11, 12) are indicated by at least one of the following automatic braking interventions:
a) pulsed braking, once or multiple times;
b) short-term or long-lasting;
c) with a defined gradient during pressure build-up or pressure reduction of the brake pressure;
d) braking intervention on one side of the vehicle differs from braking intervention on the other side of the vehicle;
e) braking intervention with brake pressure at a defined level;
f) locking a spring-loaded brake.

14. Method according to any of claims 12 and 13, **characterized in that** an automatic braking intervention is not continued or not intensified only if there is a reaction from an operator or the driver.

15. Method according to any of claims 12 to 14, **characterized in that** the rear-area monitoring system is operated by actuating a service brake.

## Revendications

1. Système de freinage électronique pour un véhicule (10, 11, 12), comportant un système de surveillance d'espace arrière et la possibilité de réaliser des interventions de freinage automatiques, dans lequel un état de fonctionnement du système de surveillance d'espace arrière peut être signalé au conducteur par une intervention de freinage automatique, et dans lequel l'intervention de freinage est limitée dans le temps et est prévue pour le cas où le système de surveillance d'espace arrière est opérationnel et ne présente aucun défaut,
**caractérisé en ce qu'**un freinage continu est prévu en cas d'apparition d'un défaut dans le système de surveillance d'espace arrière préalablement activé.

2. Système de freinage selon la revendication 1, **caractérisé en ce que** le système de freinage est conçu de telle sorte que, au début d'une marché arrière du véhicule (10, 11, 12) et lorsque le système de surveillance d'espace arrière est activé, une intervention de freinage peut être réalisée automatiquement, même si le système de surveillance d'espace arrière ne détecte aucun obstacle empêchant la poursuite de la marche arrière.

3. Système de freinage selon l'une des revendications 1 et 2,
**caractérisé en ce que** la durée de l'intervention de freinage est prévue comme étant inférieure à 1 seconde.

4. Système de freinage selon l'une des revendications 1 à 3,
**caractérisé en ce que** l'intervention de freinage est prévue après moins d'un mètre de marche arrière.

5. Système de freinage selon l'une des revendications précédentes,
**caractérisé en ce qu'**un freinage continu jusqu'à l'arrêt complet est prévu.

6. Système de freinage selon l'une des revendications 1 à 5,
**caractérisé en ce que** le système de surveillance d'espace arrière peut être enclenché par l'actionnement d'un frein de service.

7. Système de freinage selon l'une des revendications 1 à 6,
**caractérisé en ce que** l'intervention de freinage peut être supprimée par l'actionnement d'un frein de service.

8. Système de freinage selon l'une des revendications 1 à 7,
**caractérisé en ce que,** pour signaler différents états du système de surveillance d'espace arrière ou du véhicule (10, 11, 12), au moins l'une des interventions de freinage automatiques suivantes est prévue :
a) freinage par impulsions, unique ou répété ;
b) de manière temporaire ou en continu ;
c) avec un gradient défini lors de l'augmentation de pression ou de la diminution de pression de la pression de freinage ;
d) intervention de freinage d'un côté du véhicule différant de l'intervention de freinage de l'autre côté du véhicule ;
e) intervention de freinage avec une pression de freinage d'un niveau défini ;
f) vérification d'un frein à accumulateur à ressort.

9. Système de freinage selon l'une des revendications 1 à 8,
**caractérisé en ce qu'**une intervention de freinage automatique doit être suivie d'une réaction d'un opérateur ou du conducteur afin que l'intervention de freinage ne se poursuive pas ou ne soit pas renforcée.

10. Système de freinage selon la revendication 9, **caractérisé en ce que** la réaction de l'opérateur ou du conducteur doit consister en une interaction avec le système de freinage.

11. Système de freinage selon l'une des revendications 1 à 10,
**caractérisé en ce qu'**un voyant lumineux du système antiblocage peut en outre être activé.

12. Procédé pour la commande d'un système de freinage électronique dans un véhicule (10, 11, 12) comportant un système de surveillance d'espace arrière et la possibilité d'une intervention de freinage automatique, dans lequel un état de fonctionnement du système de surveillance d'espace arrière est signalé au conducteur par une intervention de freinage automatique, dans lequel, au début d'une marche arrière et lorsque le système de surveillance d'espace arrière est activé, opérationnel ou ne présente aucun défaut, une intervention de freinage limitée dans le temps est automatiquement réalisée, **caractérisé en ce que,** en cas d'apparition ultérieure d'un défaut dans le système de surveillance d'espace arrière, un freinage continu a automatiquement lieu.

13. Procédé selon la revendication 12, **caractérisé en ce que** différents états du système de surveillance d'espace arrière ou du véhicule (10, 11, 12) sont signalés par au moins l'une des interventions de freinage automatiques suivantes :
a) freinage par impulsions, unique ou répété ;
b) de manière temporaire ou en continu ;
c) avec un gradient défini lors de l'augmentation de pression ou de la diminution de pression de la pression de freinage ;
d) intervention de freinage d'un côté du véhicule différant de l'intervention de freinage de l'autre côté du véhicule ;
e) intervention de freinage avec une pression de freinage d'un niveau défini ;
f) vérification d'un frein à accumulateur à ressort.

14. Procédé selon l'une des revendications 12 et 13, **caractérisé en ce qu'**une intervention de freinage automatique ne se poursuit pas ou n'est pas renforcée uniquement lorsqu'une réaction d'un opérateur ou du conducteur se produit.

15. Procédé selon l'une des revendications 12 à 14, **caractérisé en ce que** le système de surveillance d'espace arrière est enclenché par l'actionnement d'un frein de service.
